# EUROPEAN PATENT SPECIFICATION

(11) **EP 2 175 309 B1**
(45) Date of publication and mention of the grant of the patent: **04.04.2012**
(21) Application number: 08740990.0
(22) Date of filing: 01.05.2008
(51) Int. Cl.: G02F 1/13, G02F 1/1333, G02F 1/1335

(54) **A METHOD OF MANUFACTURING A LIQUID CRYSTAL DISPLAY DEVICE**
VERFAHREN ZUR HERSTELLUNG EINER FLÜSSIGKRISTALLANZEIGE
PROCÉDÉ DE FABRICATION D'UN DISPOSITIF D'AFFICHAGE À CRISTAUX LIQUIDES

(30) Priority: 08.08.2007 JP 2007206835
(43) Date of publication of application: 14.04.2010
(73) Proprietor: Sharp Kabushiki Kaisha, Osaka-shi, Osaka 545-8522 (JP)
(72) Inventor: IKEDA, Masaki, Osaka 545-8522 (JP)
(74) Representative: Treeby, Philip David William
(86) International application number: PCT/JP2008/058351
(87) International publication number: WO 2009/019914

(56) References cited:
- EP-A2- 0 506 454
- WO-A1-2006/100780
- WO-A1-2007/061018
- JP-A- 05 210 074
- JP-A- 06 308 442
- JP-A- 07 028 052
- JP-A- 2004 359 475
- US-A1- 2006 279 681

## Description

### TECHNICAL FIELD

The present invention relates to a method of manufacturing a liquid crystal display device.

### BACKGROUND ART

US 2006/279681 A1 discloses a liquid crystal display panel including a substrate, a hole disposed in the substrate and an opaque substance filling the hole. The hole is configured to be located in an area corresponding to a bright point. EP0506454 A2 discloses a liquid crystal display device, method of correcting defective pixels, and defective-pixel correcting apparatus used therein.
WO2007/061018 A1 discloses a method of glass substrate working, comprising the step of irradiating glass substrate with pulsed laser beams so that the same is focused within the glass substrate, thereby creating, around the portion where the pulsed laser beams have been focused, a region of density higher than that of the region not irradiated with the pulsed laser beams, and the step of performing a chemical etching of the glass substrate with the use of an etchant so as to cause at least portion of the region of higher density to remain, thereby forming protrudent portion on surface of the glass substrate.
WO2006/100780 A1 discloses in a repairing method and a repairing apparatus, shape data of a defective part is extracted from defective image data acquired by picking up an image of a defective part on a glass substrate, an angle of each fine mirror of a DMD unit is controlled at a high speed in accordance with the shape data, and the defective part is irradiated with laser beams by substantially matching cross-section shapes of laser beams reflected by the fine mirrors with a shape of the defective section. The following is an example of method of manufacturing a liquid crystal display device. Switching elements (e.g., TFT) and pixel electrodes are disposed on one of glass substrates provided in a pair, and counter electrodes are arranged on the other glass substrate. Those glass substrates are then bonded with spacers between them. Liquid crystal is injected between the glass substrates so as to form a liquid crystal layer. Then, polarizing plates are attached to respective surfaces of the glass substrates to produce a liquid crystal panel. A lighting device that has a plurality of cold cathode tubes as light source is provided for the liquid crystal panel.

Such a manufacturing process of liquid crystal display device may include a step in which various kinds of inspections may be performed at certain timing to detect failures. For example, in an inspection performed after a liquid crystal layer is formed, a pair of polarizing plates for the inspection is arranged so as to sandwich the glass substrates, and a backlight for the inspection is turned on. Then, switching components are driven to check if any display failure is present.

In such an inspection, if a foreign substance is present in the liquid crystal layer, light that strikes it is irregularly reflected. A dot that looks bright on black display due to the irregularly reflected light may be detected as a luminance point defect. The luminance point defect greatly reduce the display quality and yield in production.

Patent Document 1 discloses an example of method of compensating for such a luminance point defect. According to Patent Document 1, a concave portion is formed on an opposite surface of at least one of a pair of substrates from the liquid crystal layer. More specifically, the concave portion is formed in an area of the surface that optically overlaps a luminance defect occurrence area. Moreover, a light blocking material is disposed in the concave portion and hardening resin is filled in the concave portion where the light blocking material is disposed to flatten the surface.
Patent Document 1: JP-A-2005-189360

### DISCLOSURE OF THE PRESENT INVENTION

### (Problem to be Solved by the Invention)

The invention disclosed in Patent Document 1, however, has a problem regarding degradation of glass substrate strength if the concave portion is formed deeply because the concave portion is formed in the glass substrate and the light blocking material is filled therein. The glass substrate may be broken in some cases. On the other hand, if a shallow concave portion is formed to avoid degradation of glass substrate strength, a certain size of gap is present between the concave portion and the luminance point defect occurrence area. When such a gap is present, light that has entered the glass substrate from an area outside the concave portion (i.e., non-processed area) travels around the concave portion in the glass substrate and could reach the luminance point defect occurrence area. As a result, the luminance point defect is not compensated.

The present invention was made in view of the foregoing circumstances, and an object thereof is to make a luminance point defect barely noticeable and to provide a liquid crystal display device having high display quality. Another object of the present invention is to provide a method of manufacturing the liquid crystal display device including a process of properly compensating for a luminance point defect that is present in the liquid crystal display device.

### (Means for Solving the Problem)

According to the present invention, there is provided a method of manufacturing a liquid crystal display device according to claim 1.

According to such a manufacturing process, the light blocking layer is formed by forming the externally communicable void section in the glass substrate and injecting the light blocking material therein. In comparison to means for forming a concave portion on a surface of glass substrate, the strength of the glass substrate is less likely to be degraded and the luminance point defect can be surely compensated.

Furthermore, laser having a femtosecond-order or shorter pulse width is used for forming the glass deformation part, which will eventually become the light blocking layer. By applying laser having a femtosecond-order or shorter pulse width to the glass substrate, various changes occur in conditions of glass through phases of optical energy absorption, energy transfer to the glass and diffusion. As a result, deformation is induced in the glass. The laser application enables more flexible processing compared to a drill for example. Therefore, the light blocking layer can be formed according to a shape of the luminance point defect occurrence area.
When forming the glass deformation part by laser application, laser having a picosecond or longer pulse width can be used. However, an average energy level is very high and a surrounding area of the laser focus may be thermally damaged and a surround area of the glass deformation part may become clouded. On the other hand, when applying laser having a femtosecond-order or shorter pulse width, energy is absorbed in the laser application area faster than conduction of heat generated by the laser to the surrounding area. Thus, the surrounding area is not thermally or chemically damaged.

As described above, the method of manufacturing a liquid crystal display device of the present invention forms the glass deformation part in the compensation area that can block light toward the luminance point defect occurrence area in the glass substrate by applying laser having a femtosecond-order or shorter pulse width. Then, the glass deformation part is removed by etching, for example, to form the externally communicable void section and the light blocking layer is formed by injecting the light blocking material into the externally communicable void section. Light from the lighting device can be blocked by the light blocking layer without degrading the strength of the glass substrate. As a result, the light does not reach the luminance point defect occurrence area and therefore the luminance point defect becomes less noticeable.

Preferably, in the forming of the externally communicable void section, the void portion is formed in the glass substrate and the through portion that penetrates from the void portion through the opposite surface of the glass substrate from the liquid crystal layer is formed.
By forming the externally communicable void section having the through portion that penetrates through the surface of the glass substrate, the light blocking material can be injected from the surface of the glass substrate through the through portion.

Preferably, in the forming of the externally communicable void section, the through portion is formed in at least two parts.
In this case, when the light blocking material is injected from the through portion, air in the externally communicable void section is purged from the other through portion or parts of the circular through portion other than the one from which the light blocking material is injected. Thus, the light blocking material is smoothly injected and a dense light blocking layer is formed.

Preferably, in the forming of the light blocking layer, the light blocking layer having an area 1.0 to 1.4 times larger than that of the shadow of the luminance point defect occurrence area projected on the glass substrate is formed.
Even when the area of the light blocking layer is relatively small, illumination light can be surely blocked.
Means that is less likely to degrade the strength of the glass substrate is used for forming the light blocking layer of the present invention. Thus, the light blocking layer can be formed in a deep area of the glass substrate. Namely, the light blocking layer can be formed adjacent to the luminance point defect occurrence area. Therefore, even when the area of the light blocking area is relatively small, the light blocking area can restricts illumination light provided by the lighting device from traveling around when passing through the glass substrate and reaching the luminance point defect occurrence area. As a result, the luminance point defect is not noticeable and a preferable display quality is provided.

Preferably, the light blocking layer is formed in the glass substrate arranged on the lighting device side among the pair of glass substrates.
In this case, the light blocking layer is formed on a side opposite from the display surface of the liquid crystal display device. This reduces chances that a viewer notices the light blocking layer.

### (Effect of the Invention)

The present invention makes luminance point defects less noticeable and therefore provides a liquid crystal display device having high display quality.

### BRIEF DESCRIPTION OF THE DRAWINGS

[FIG. 1] is a perspective view illustrating a general construction of a liquid crystal display device according to an embodiment of the present invention;
[FIG. 2] is a cross-sectional view of the liquid crystal display device illustrated in FIG. 1 along the line A-A;
[FIG. 3] is a vertical sectional view of a main part of a liquid crystal panel included in the liquid crystal display device illustrated in FIG. 1;
[FIG. 4] is a horizontal sectional view of a main part of a liquid crystal panel included in the liquid crystal display device illustrated in FIG. 1;
[FIG. 5] is an explanatory view explaining operational effect of the liquid crystal display device of the embodiment;
[FIG. 6] is an explanatory view explaining an illumination inspection process for a liquid crystal panel, which is an inspection object;
[FIG. 7] is a side view illustrating a general construction of a luminance point defect compensation device;
[FIG. 8] is an explanatory view explaining a process in a method of manufacturing the liquid crystal display device illustrated in FIG. 1;
[FIG. 9] is an explanatory view explaining a process in a method of manufacturing the liquid crystal display device illustrated in FIG. 1;
[FIG. 10] is an explanatory view explaining a process in a method of manufacturing the liquid crystal display device illustrated in FIG. 1;
[FIG. 11] is a vertical sectional view of a main part of a modification of the liquid crystal display device;
[FIG. 12] is a horizontal sectional view of a main part of a modification of the liquid crystal display device illustrated in FIG. 11;
[FIG. 13] is a vertical sectional view of a main part of a modification of the liquid crystal display device;
[FIG. 14] is a horizontal sectional view of a main part of a modification of the liquid crystal display device illustrated in FIG. 13;
[FIG. 15] is a vertical sectional view of a main part of a modification of the liquid crystal display device; and
[FIG. 16] is a horizontal sectional view of a main part of a modification of the liquid crystal display device illustrated in FIG. 15.

### Explanation of Symbols

10: Liquid crystal display device, 11: Liquid crystal panel, 12: Backlight device (Lighting device), 31, 41: Glass substrate, 50: Liquid crystal layer, 60: Light blocking layer, 61: Void portion, 62: Through portion, 63: Externally communicable void section, 64: Glass deformation part, 64a: Planar portion, 64b: Circular portion, X: Foreign substance (Luminance point defect occurrence area).

### BEST MODE FOR CARRYING OUT THE INVENTION

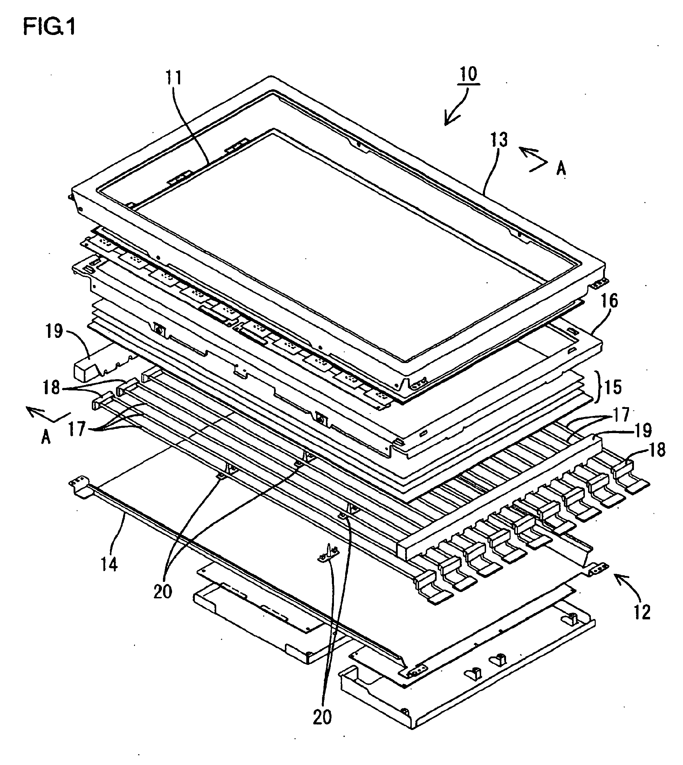

An embodiment of the present invention will be explained with reference to FIGS. 1 to 10.

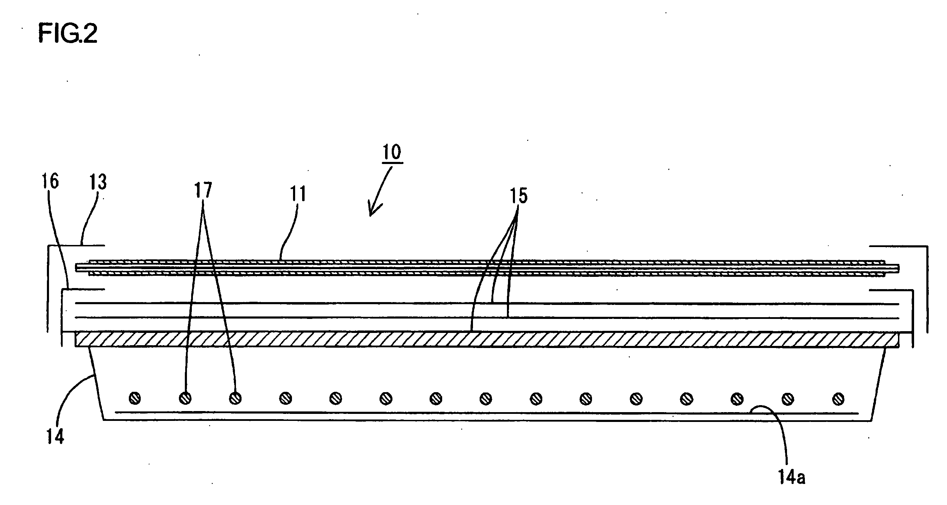

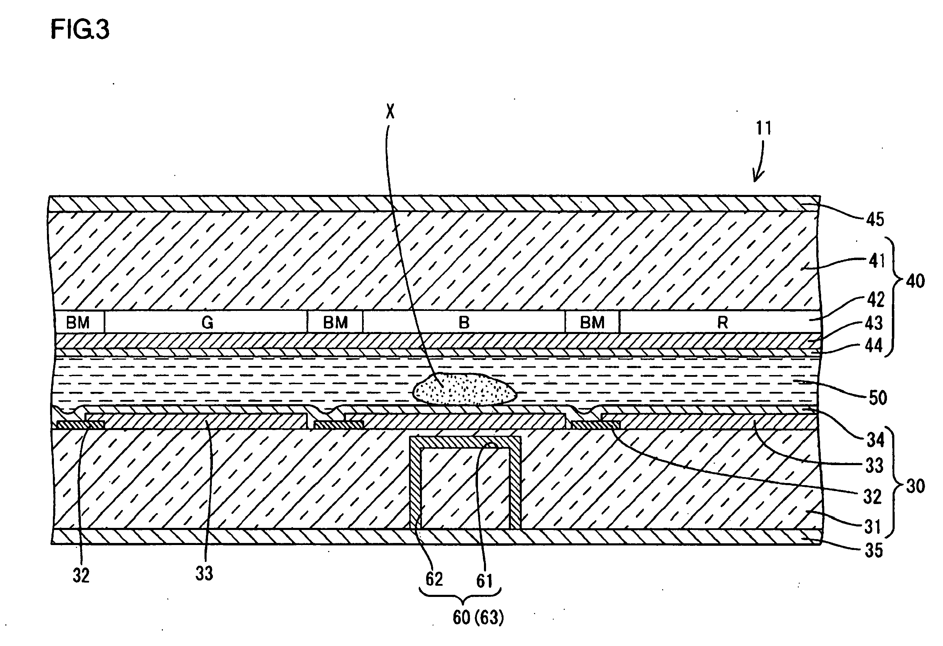

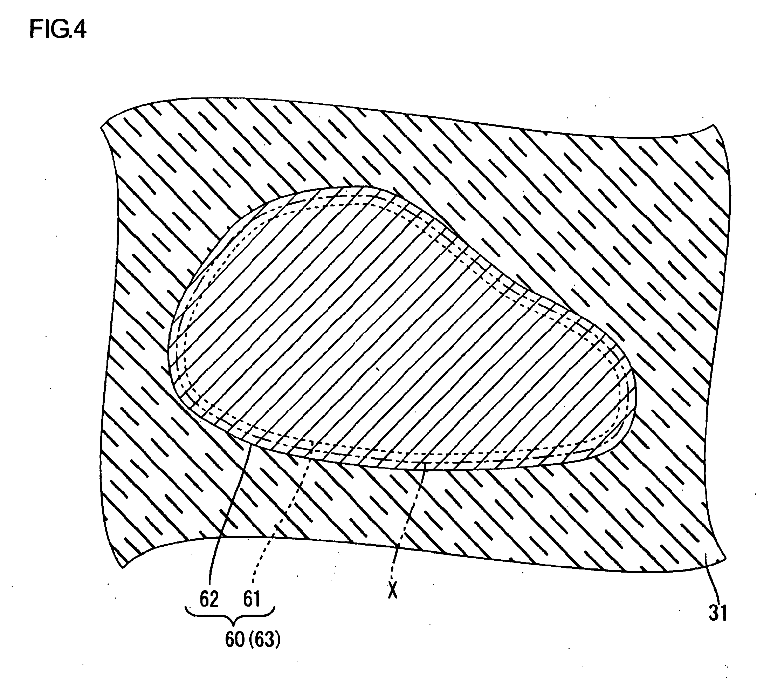

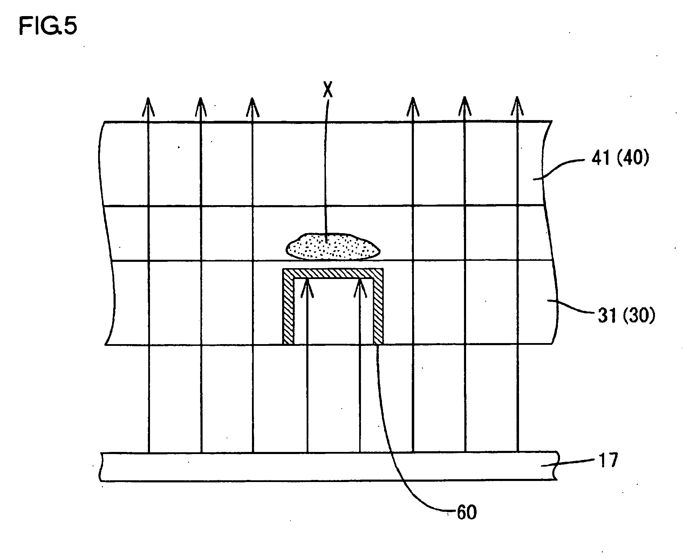

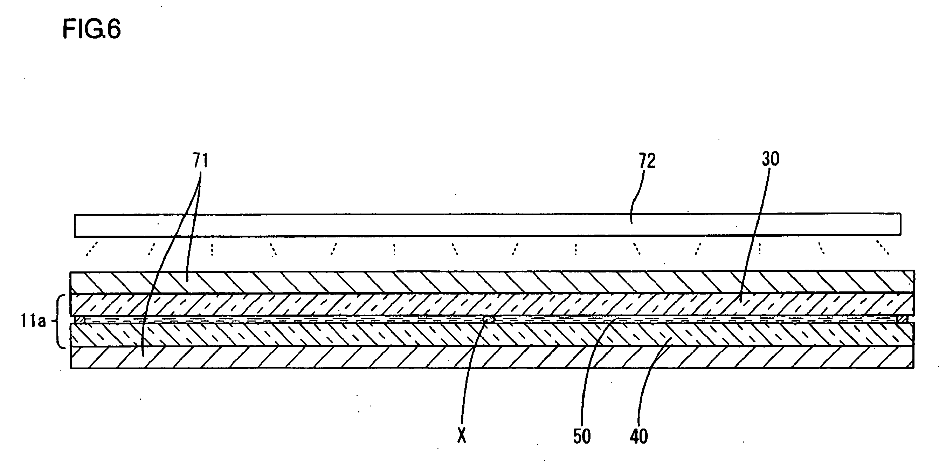

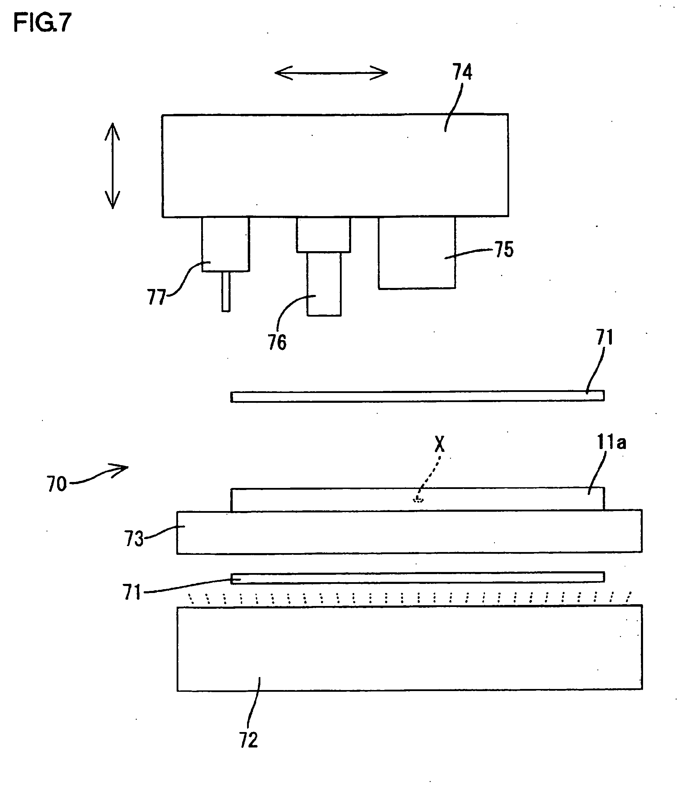

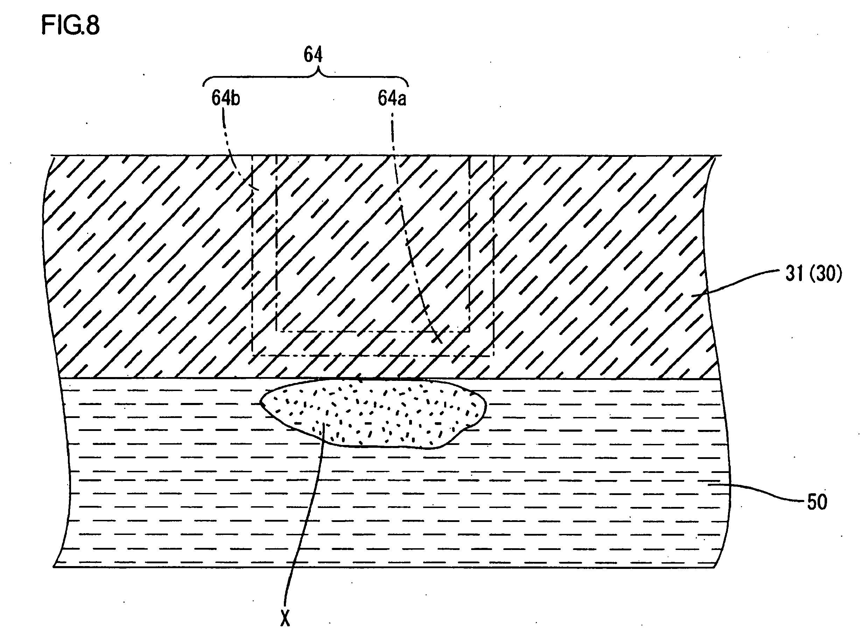

FIG. 1 is a perspective view illustrating a general construction of a liquid crystal display device according to an embodiment of the present invention. FIG. 2 is a cross-sectional view of the liquid crystal display device illustrated in FIG. 1 along the line A-A. FIG. 3 is a vertical sectional view of a main part of a liquid crystal panel included in the liquid crystal display device illustrated in FIG. 1. FIG. 4 is a horizontal sectional view of a main part of the liquid crystal panel. FIG. 5 is an explanatory view explaining operational effect of the liquid crystal display device of the embodiment. FIG. 6 is an explanatory view explaining an illumination inspection process for a liquid crystal panel, which is an inspection object. FIG. 7 is a side view illustrating a general construction of a luminance point defect compensation device. FIGS. 8 to 10 are explanatory views explaining respective processes in a method of manufacturing the liquid crystal display device illustrated in FIG. 1.

An overall construction of a liquid crystal display device 10 according to the present embodiment will be explained. The liquid crystal display device 10, as illustrated in FIGS. 1 and 2, includes a liquid crystal panel 11 having a rectangular shape and a backlight device (i.e., lighting device) 12, which is an external light source. The liquid crystal panel 11 and the backlight device 12 are integrally held by a bezel 13 and the like. The backlight device 12 is a so-called direct-light type back light device. It includes a plurality of light sources (cold cathode tubes 17 are used for high-pressure discharge tubes here) arranged directly below a backside of the liquid crystal panel 11, which will be explained later, that is, an opposite side from the panel surface (i.e., display surface), and along the panel surface.

The backlight device 12 includes a backlight chassis (i.e., chassis) 14, a plurality of optical members 15 (a diffuser plate, a diffusing sheet, a lens sheet and a reflection type polarizing plate, arranged in this order from the lower side of the drawings) and a frame 16. The backlight chassis 14 is formed in a substantially box-shape having an opening on a top. The optical members 15 are arranged so as to cover the opening of the backlight chassis 14. The frame 16 holds the optical members 15 to the backlight chassis 14. Furthermore, cold cathode tubes 17, resin holders 18, lamp holders 19 and lamp clips 20 are installed in the backlight chassis 14. The resin holders 18 hold ends of the cold cathode tubes 17. The lamp holders 19 collectively cover ends of cold cathode tubes 17 and the holders 18. The lamp clips 20 hold the cold cathode tubes 17 to the backlight chassis 14. A light emitting side of the backlight device 12 is a side closer to the optical member 15 than the cold cathode tube 17.

Each cold cathode tube 17 has an elongated tubular shape. A plurality of cold cathode tubes 17 (sixteen tubes in FIG. 1) are housed in the backlight chassis 14 such that the longitudinal direction (i.e., axial direction) of each cold cathode tube 17 matches the longitudinal direction of the backlight chassis 14. The lamp clips 20 for mounting the cold cathode tubes 17 to the backlight chassis 14 function as a clip-type holding member for light sources. They are made of synthetic resin (e.g., polycarbonate).

A light reflecting surface is formed on an inner surface (i.e., on a light source side) of the backlight chassis 14 with a light reflecting sheet 14a. The backlight chassis 14 having the light reflecting sheet 14a can reflect light emitted from each cold cathode tube 17 toward the optical members 15, which includes the diffuser plate. A resin sheet having light reflectivity may be used for the light reflecting sheet 14a, for example.

Next, the liquid crystal panel 11 will be explained. The liquid crystal panel 11, as illustrated in FIG. 3, includes a pair of boards 30, 40 bounded with a predetermined gap between them and liquid crystal sealed between those boards 30, 40. The liquid crystal forms a liquid crystal layer 50.

The board 30 is a component board including a glass substrate 31, TFTs (Thin Film Transistor) 32, pixel electrodes 33 and an alignment film 34. The TFTs 32, which are semiconductor components, are formed on a liquid crystal layer 50 side of the glass substrate 31. The pixel electrodes 33 are electrically connected with the TFTs 32. The alignment film 34 is formed on the liquid crystal layer 50 side of the TFTs 32 and pixel electrodes 33. On opposite side of the glass substrate 31 from the liquid crystal layer 50, a polarizing plate 35 is provided. The board 30 (or the glass substrate 31) is arranged on a backlight device 12 side.

The board 40 is an opposite board including a glass substrate 41, a color filter 42, an counter electrode 43, and alignment film 44. The color filter 42 is formed on the liquid crystal layer 50 side of the glass substrate such that colored portions of R (red), G (green), B (blue) and the like are arranged in a predetermined manner. The counter electrode 43 is formed on the liquid crystal 50 side of the color filter 42. The alignment film 44 is formed on the liquid crystal 50 side of the counter electrode 43. On an opposite side of the glass substrate 41 from the liquid crystal layer 50, a polarizing plate 45 is provided.

As illustrated in FIGS. 3 and 4, the present embodiment further includes means for blocking light toward a foreign substance X (or a luminance point defect occurrence area) that could be a possible cause of a luminance point defect if it is present in the liquid crystal layer 50. More specifically, the light blocking layer 60 is formed in an area that overlaps a shadow of the foreign substance X projected on the glass substrate 31 of the board 30 when viewed in plan.

The light blocking layer 60 includes an externally communicable void section 63 having a void portion 61 and a through portion 62. The void portion 61 is formed inside the glass substrate 31. The through portion 62 is formed in a circular shape along the outer periphery of the void portion 61. It penetrates through an opposite surface of the glass substrate 31 from the liquid crystal layer 50 (i.e., a surface on the polarizing plate side). A light blocking material is filled in the externally communicable void section 63.
Moreover, when the light blocking layer 60 and the foreign substance X are viewed in plan as shown in FIG. 4, an overall shape of the light blocking layer 60 looks being formed along the shape of the foreign substance X**.** An area of the shadow of the light blocking layer 60 projected on the surface of the glass substrate 31 is about 1.1 times larger than that of the foreign substance X.

The void portion 61 is a space with a planar expansion along the planar direction of the glass substrate 31. The plane corresponding to the planar expansion has a function for mainly blocking light toward the luminance point defect occurrence area. The through portion 62 is formed in an area that overlaps the void portion 61 in a planar view of the board. It has a function to enable communication between the void portion 61 and an outside of the board.

According to the liquid crystal display device 10 of the present embodiment, the light blocking layer 60 is formed in the glass substrate 31 in an area that can block light toward the foreign substance X (luminance point defect occurrence area) that is a possible cause of the luminance point defect. Thus, light does not reach the foreign substance X and therefore the luminance point defect is not noticeable (see FIG. 5).
Furthermore, the light blocking layer 60 is formed by injecting the light blocking material into the externally communicable void section 63 having the void portion 61 and the through portion 62. The externally communicable void section 63 is formed in the minimum dimension required as a flow passage of the light blocking material. Thus, the strength of the glass substrate 31 is less likely to be degraded during formation of the light blocking layer 60.

In the present embodiment, the through portion 62 is formed in a circular shape along the outer periphery of the void portion 61 to form the light blocking layer 60.
According to such a through portion 62 having a circular shape, air in the externally communicable void section 63 is purged from parts of the through portion 62 other than the one from which the light blocking material is injected during injection of the light blocking material from the through portion 62. Therefore, a dense light blocking layer 60 is provided.

In the present embodiment, the area of shadow of the light blocking layer 60 projected on the surface of the glass substrate 31 is about 1.1 times larger than that of the foreign substance X.
Even when the area of the light blocking layer 60 is relatively small, the present embodiment can surely provide light blocking effect because of the following reasons.
Forming the externally communicable void section 63, which is less likely to reduce the strength of the glass substrate 31, is used for forming the light blocking layer 60 of the present embodiment as described above. Even when the light blocking layer 60 is formed in a deep area of the glass substrate 31, the glass substrate 31 is less likely to be broken. Therefore, the light blocking layer 60 is provided adjacent to the foreign substance X. Even when the area of the light blocking layer 60 is relatively small, it restricts light provided by the backlight device 12 from traveling around when passing through the glass substrate 31 and reaching the foreign substance X. Thus, the luminance point defect is not noticeable and the preferable display quality is provided.

In the present embodiment, the light blocking layer 60 is formed in the glass substrate 31, among the pair of glass substrate 31 and 41, located on the backlight device 12 side.
In this case, the light blocking layer 60 is formed on an opposite side from the display surface. This reduces chances that a viewer notices the light blocking layer 60.

Next, a method of manufacturing the liquid crystal display device 10 will be explained.
A manufacturing process including a compensation process will be explained here.

First, the glass substrate 31 is prepared, and the TFTs 32 and the pixel electrodes 33 are formed on the glass substrate 31. Next, the alignment film 34 is formed on the TFTs 32 and the pixel electrodes 33 to produce the board 30, which is a component board.
Meanwhile, the glass substrate 41, which is another glass substrate other than the above-described glass substrate 31, is prepared. The counter electrode 43 is formed on the glass substrate 41. Furthermore, the alignment film 44 is formed on the counter electrode 43 to produce the board 30, which is an opposite board.

The boards 30 and 40 are bonded with a predetermined gap between them. Liquid crystal is sealed in the gap to form the liquid crystal layer 50. Moreover, the polarizing plates 35 and 45 are arranged on the opposite sides of the boards 30 and 40 from the liquid crystal layer 50, respectively, to produce the liquid crystal panel 11 (see FIG. 3) . In an assembly process of the liquid crystal panel 11 and the backlight device 12, which will be explained later, the board 30 (or the glass substrate 31) among those boards 30 and 40 is arranged on the backlight device 12 side.

In the above-described manufacturing process, an illumination inspection for detecting display failures is performed after the liquid crystal layer 50 is formed. The liquid crystal panel in the manufacturing process is referred to as a test liquid crystal panel 11a hereinafter.

More specifically, a pair of polarizing plates 71 for inspection is arranged so as to sandwich the boards 30, 40 of the test liquid crystal panel 11a, as illustrated in FIG. 6. A backlight 72 for inspection is turned on. Electrical lines formed on the glass substrate 31 are connected to a test circuit and appropriate electrical signals are fed to respective lines to drive the TFTs 32. Display conditions produced by controlling alignment of the liquid crystal that forms the liquid crystal layer 50 are inspected through image processing or visually by an inspector.

In the inspection, a dot that looks bright on black display may be detected as a luminance point defect. The luminance point defect may result from scattered reflection of light off a foreign substance X that is present in the liquid crystal layer 50. When such a luminance point defect is detected, a luminance point defect compensation process, which will be explained next, will be performed for compensating for the luminance point defect. Possible causes of the foreign substance X entering the liquid crystal layer 50 include that the foreign substance X has adhered to a surface of the board 30 or 40 on the liquid crystal layer 50 side before injecting the liquid crystal, and that it has been entered in the liquid crystal.

The luminance point defect compensation process includes specifying a compensation area that can block light toward the foreign substance X, which is a possible cause of the luminance point defect, in the glass substrate 31, forming a glass deformation part 64 in the glass substrate by applying laser having a femtosecond order or shorter pulse width to the specified compensation area in the glass substrate 31, forming the externally communicable void section 63 by removing the glass deformation part 64, and forming the light blocking layer 60 by injecting a light blocking material into the externally communicable void section 63 and hardening the light blocking material.

In the luminance point defect compensation process, a luminance point defect compensation device 70 illustrated in FIG. 7 is used for compensating for a luminance point defect. The luminance point defect compensation device 70 has a stage 73 (not illustrated in FIG. 6), a pair of polarizing plates 71 for inspection, a backlight 72 for inspection and an XYZ driving section 74. The stage 73 is provided for setting on the test liquid crystal panel 11a which is a compensation object. The polarizing plates 71 are arranged so as to sandwich the stage 73. The XYZ driving section 74 moves in horizontal and vertical directions of the stage 73. The XYZ driving section 74 has a CCD camera 75, a laser emitting section 76 and a dispenser 77 arranged in predetermined relative positions. The CCD camera 75 is provided for capturing the foreign substance X and its surrounding area. The laser emitting section 76 outputs laser for forming the glass deformation part. The dispenser 77 is provided for injecting the light blocking material. The stage 73 is made of glass so as to transmit light emitted from the backlight 72.

With the luminance point defect compensation device 70, a compensation area in the glass substrate 31 that can block light toward the foreign substance X is specified. First, the test liquid crystal panel 11a, which may be a compensation object, is set on the stage 73 in the predetermined position. It should be set such that the glass substrate 31 is on the top. Next, the backlight 72 for inspection is turned on to put the test liquid crystal panel 11a in a black display state. The XYZ driving section 74 is moved in the horizontal direction of the stage 73 to capture display conditions by the CCD camera 75. The captured display conditions are processed through image processing to provide information on location and size of the foreign substance X.

Next, forming the glass deformation part 64 in the specified compensation area will be performed. In this operation, the glass deformation part 64 is formed by applying femtosecond laser having a 10⁻¹³ second-order pulse width to the glass substrate 31. More specifically, the XYZ driving section 74 is moved so that the laser emitting section 76 is positioned directly above the area that can block light toward the foreign substance X. In the present embodiment, the laser is applied in the following condition: 780nm wavelength, 100fs pulse width, 1kHz repeating frequency, 1mJ pulse energy and 1W output.

At the laser focus in the glass substrate 31, a glass structure is deformed due to instantaneous high temperature and pressure. By moving the laser beam focus continuously within the glass substrate 31, the glass deformation part 64 is formed as a continuous area along a trace of laser beam focuses as shown in FIG. 8.
In the present embodiment, the glass deformation part 64 including planar portion 64a and circular portion 64b is formed. The glass deformation part 64 has a similar shape to a shadow of the foreign substance X projected on the glass substrate 31 and overlaps it. The circular portion 64 continues from an outer periphery of the glass deformation part 64 to an opposite surface of the glass substrate 31 from the liquid crystal layer 50.

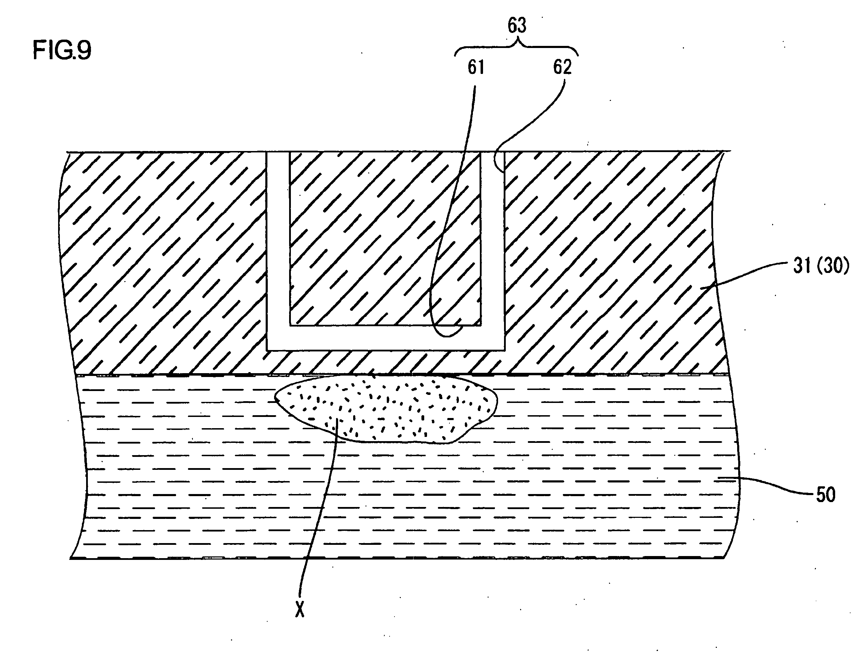

Next, forming the externally communicable void section 63 by removing the above-described glass deformation part 64 is performed. In the present embodiment, wet etching by hydrofluoric acid is used as means for removing the glass deformation part 64. With the means, an etching speed at the glass deformation part 64 is 50 times faster than a normal glass structure part. Therefore, only the glass deformation part 64 is etched easily and the externally communicable void section 63 in which the glass deformation part is hollowed out as shown in FIG. 9.
The externally communicable void section 63 has the same shape as the glass deformation part 64. Namely, it includes the void portion 61 formed in a planar shape along the planar direction of the glass substrate 31 and the through portion 62 formed in a circular shape and penetrating from the void portion 61 through the opposite surface of the glass substrate 31 from the liquid crystal layer 50.

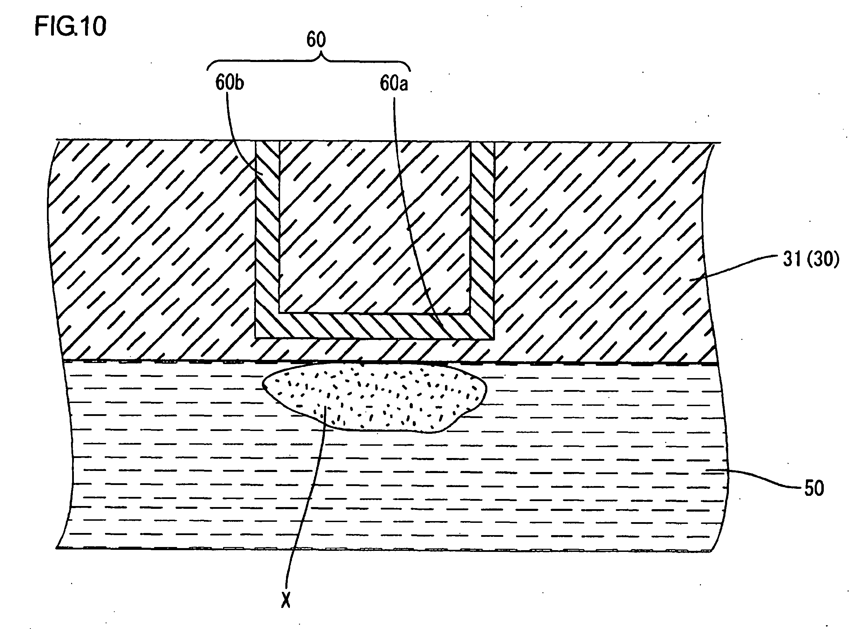

Next, forming the light blocking layer 60 by injecting a light blocking material to the above-described externally communicable void section 63 is performed. In this operation, the XYZ driving section 74 is moved so that the dispenser 77 is positioned directly above the through portion 62 of the externally communicable void section 63. Cashew resin having light blocking effect is injected from the dispenser 77 into the externally communicable void section 63. Then, it is solidified to form the light blocking layer 60 (see FIG. 10). The light blocking layer 60 that is currently formed has an area about 1.1 times larger than that of the shadow of the foreign substance X projected on the glass substrate 31. The light blocking layer 60 has the planar light blocking section 60a and the circular light blocking section 60b. The planar light blocking section 60a has the same shape as the shadow of the foreign substance X projected on the glass substrate 31 and overlaps it. The circular light blocking section 60b continues from the outer periphery of the planar light blocking section 60a to the opposite surface of the glass substrate 31 from the liquid crystal layer 50.

A driver (not illustrated) that is manufactured in a different process and the backlight device 12 are assembled to the liquid crystal panel 11 in which the compensation for the luminance point defect is performed in the above process to produce the liquid crystal display device 10.

According to the method of manufacturing the liquid crystal display device 10 of the present embodiment including the compensation process, the light blocking layer 60 is formed by forming the externally communicable void section 63 in the glass substrate 31 and injecting a light blocking material therein.
Because a space required for injecting a light blocking material is formed as an injection passage rather than a large void portion such as a concave portion, the strength of the glass substrate 31 is less likely to be degraded, and the luminance point defect is surely compensated.

Furthermore, the glass deformation part 64, which eventually becomes the light blocking layer 60, is formed by applying femtosecond laser in the present embodiment.
By using laser having high processing flexibility, the light blocking layer 60 can be formed according to shape, size or the like of the foreign substance X. As a result, a light blocking area can be minimized.
Moreover, by using the femtosecond laser, energy is absorbed by the laser application area faster than conduction of heat created by the laser to a surrounding area of the laser application area. The glass substrate around the laser focus is not thermally or chemically damaged. Thus, the display quality of the liquid crystal display device 10 is less likely to be degraded.

In the present embodiment, the void portion 61 is formed in the planar direction of the glass substrate 31. The externally communicable void section 63 is formed by forming the through portion 62 so as to penetrate from the void portion 61 through the opposite surface of the glass substrate 31 from the liquid crystal layer 50.
By forming the externally communicable void section 63 including the through portion 62 that is pieced through the surface of the glass substrate 31, the light blocking material can be injected from the surface of the glass substrate 31 via the through portion 62.

### <Other embodiment>

The present invention is not limited to the embodiment explained in the above description made with reference to the drawings. The following embodiments may be included in the technical scope of the present invention, for example.

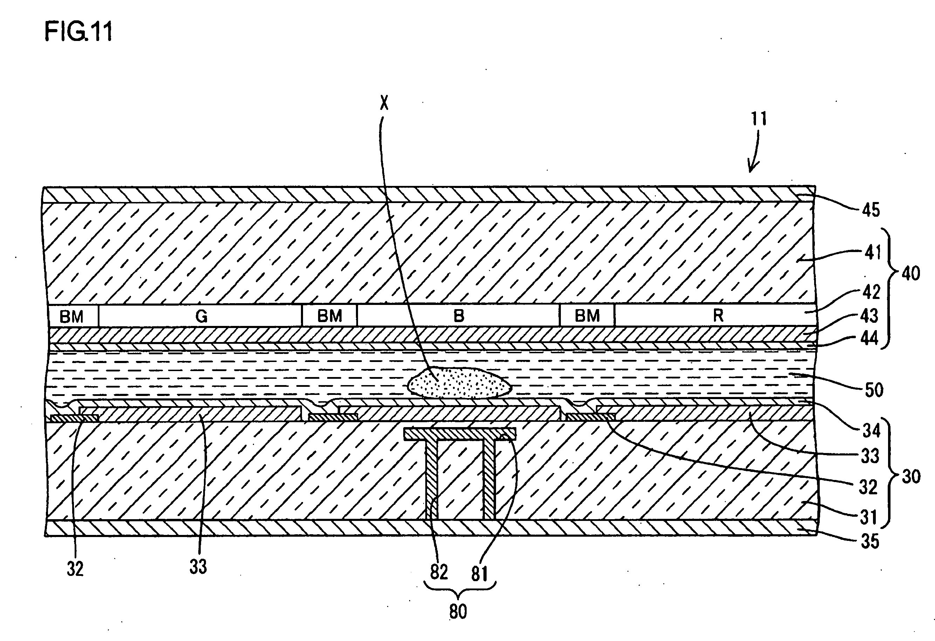

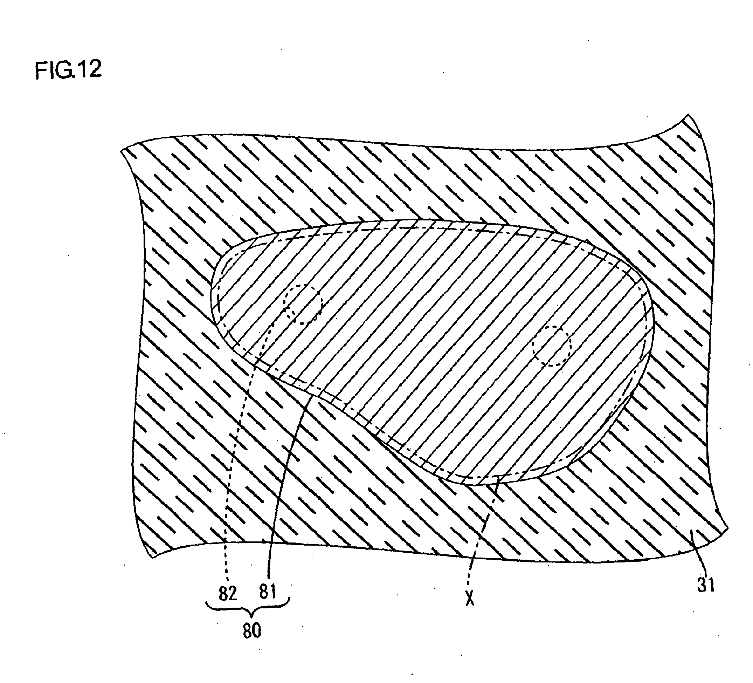

(1) In the above embodiment, when the light blocking layer 60 is being formed, the through portion 62 having a circular shape is formed along the outer periphery of the void portion 61. However, as shown in FIGS. 11 and 12, a light blocking layer 80 may be formed by forming two through portions 82 so as to penetrate from the inside of void portion 81 through the surface of the glass substrate 31.

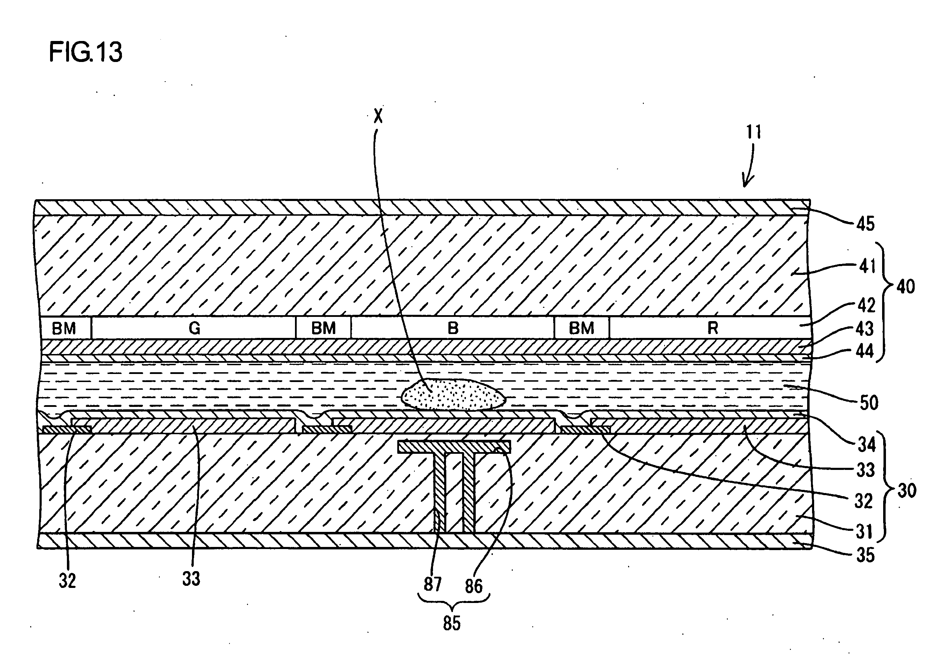

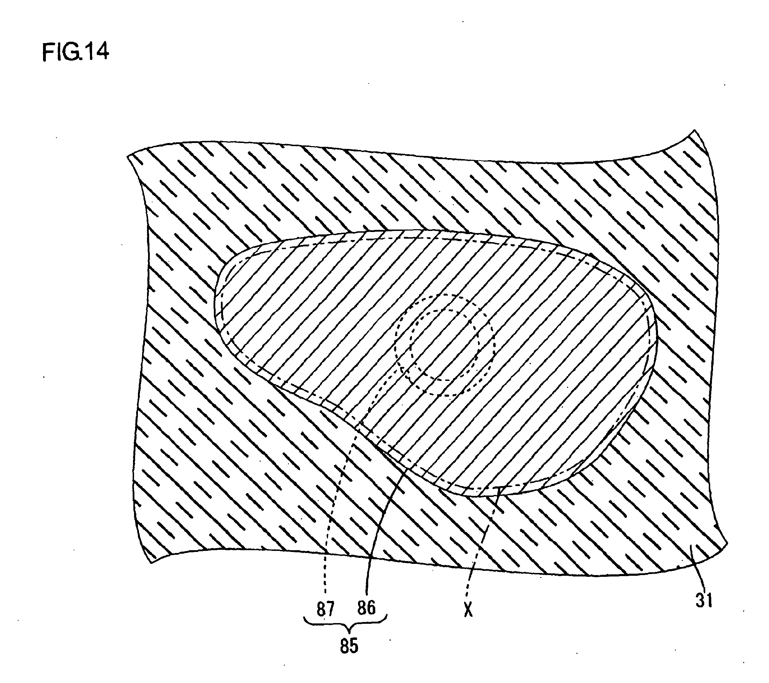

(2) In the above embodiment, when the light blocking layer 60 is being formed, the through portion 62 having a circular shape is formed along the outer periphery of the void portion 61. However, as shown in FIGS. 13 and 14, the light blocking layer 85 may be provided by forming a through portion 87 having a circular shape so as to penetrate from the inside of void portion 86 through the surface of the glass substrate 31.

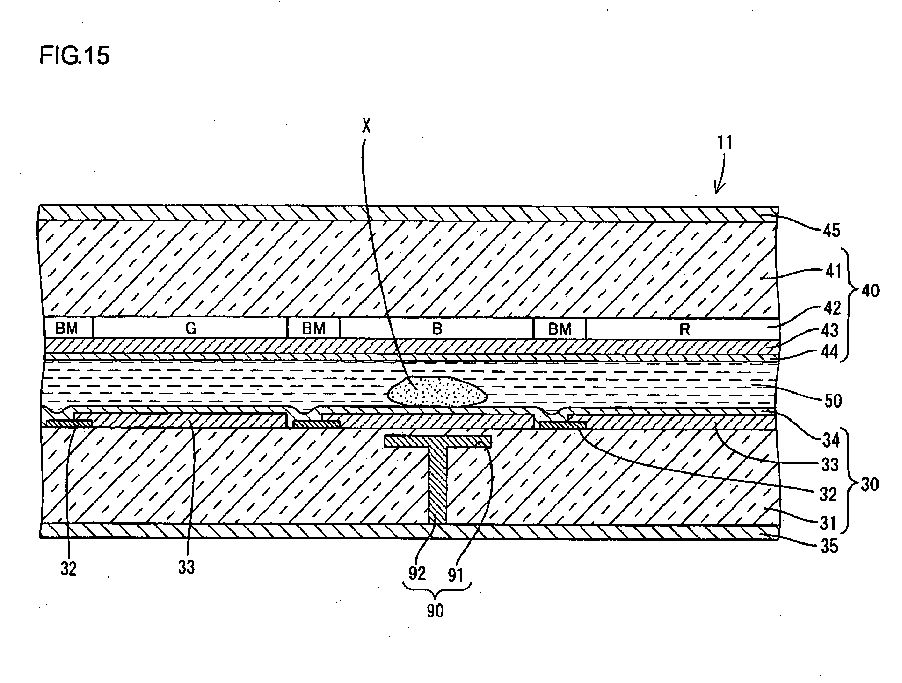

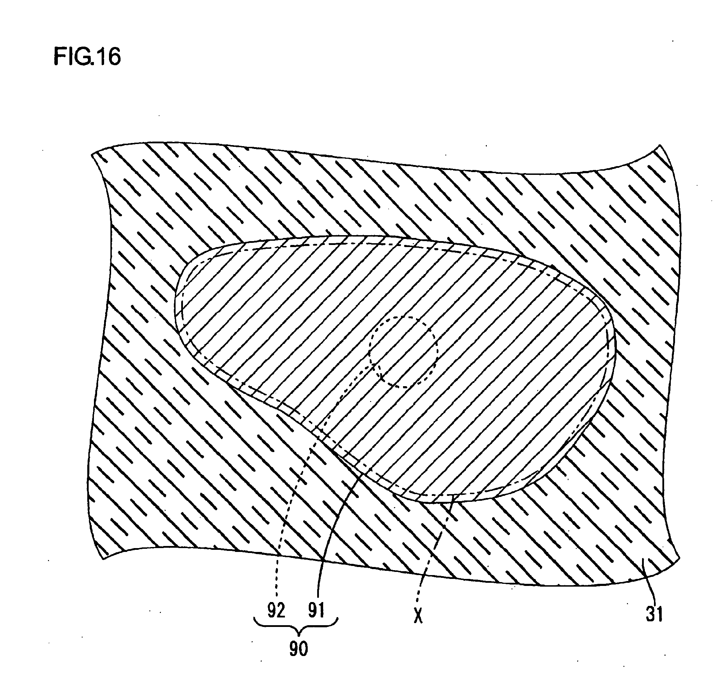

(3) In the above embodiment, when the light blocking layer 60 is being formed, the through portion 62 having a circular shape is formed along the outer periphery of the void portion 61. However, as shown in FIGS. 15 and 16, the light blocking layer 90 may be provided by forming one through portion 92 so as to penetrate from the inside of void portion 91 through the surface of the glass substrate 31. In a view of effective purging of air during injection of a light blocking material, two or more through portions or circular through portion should be provided.

(4) In the above embodiment, the light blocking material is injected into the entire externally communicable void section 63. However, the same level of light blocking effect can be provided when the light blocking material is injected into at least the void portion 61. Namely, filling the light blocking material in the through portion 62 is not necessary.

(5) In the above embodiment, the light blocking layer 60 is formed in the board 30 (or the glass substrate 31) located on the backlight device 12 side. However, is can be formed in the board 40 (or the glass substrate 41) located on the opposite side from the backlight device 12 side (i.e., on the display surface side).

(6) In the above embodiment, the femtosecond laser having a 100fs pulse width is applied for forming the glass deformation part 64. In a view of reducing damages to a surrounding area of the laser focus, the pulse width is smaller the better. Thus, laser having a smaller pulse width within an acceptable range for compensation efficiency can be used.

(7) In the above embodiment, the wavelength of laser used to form the glass deformation part 64 is 780nm. However, laser having any wavelength can be used as long as it is less likely to be absorbed when passing through the glass substrate 31. The wavelength of 750nm to 850nm is preferable. Moreover, other conditions of laser application may be changed based on composition of the glass substrate to which the laser is applied.

(8) In the above embodiment, specifying the compensation area, forming the glass deformation part 64 by applying laser, and injecting a light blocking material to the externally communicable void section 63 are performed by the luminance point defect compensation device 70. However, separate devices may be used for performing those operations to make a structure of each device simple.

(9) In the luminance point defect compensation device 70 of the above embodiment, the XYZ driving section 74, which includes the DDC camera 87, the laser emitting section 76 and the dispenser 77, moves in the horizontal or vertical direction of the stage 73. However, the luminance point defect compensation device 70 can have configurations such that a stage moves in the horizontal or vertical direction of a CCD camera, a laser emitting section, and a dispenser that are fixed.

(10) In the above embodiment, the luminance point defect is defined as being caused by the foreign substance X that is present in the liquid crystal layer 50. However, it may be caused by a malfunction of TFT 32, pixel electrode 33 or the like generated by a short circuit. The present invention can be applied for such a case.

(11) The present invention can be also applied to a liquid crystal display device using switching elements other than TFTs 32.

## Claims

1. A method of manufacturing a liquid crystal display device (10) including a liquid crystal panel (11) having a liquid crystal layer (50) between a pair of glass substrates (31, 41) and a lighting device (12) that provides illumination light to said liquid crystal panel, comprising a luminance point defect caused by a foreign substance in the liquid crystal layer compensation process for compensating for a luminance point defect, said luminance point defect compensation process includes:
specifying a compensation area in at least one of said pair of glass substrates in an area that blocks light travelling toward a luminance point defect occurrence area;
forming a glass deformation part (64) having a planar portion inside the at least one of said pair of glass substrates and a through portion (62; 82; 87; 92) that penetrates from the planar portion to the surface of said at least one of said pair of glass substrates opposite to said liquid crystal layer by applying laser light having a femtosecond-order or shorter pulse width to said compensation area;
forming an externally communicable void section (63) by removing said glass deformation part; and
forming a light blocking layer (60; 80; 85; 90) by injecting a light blocking material into said externally communicable void section and hardening the light blocking material.

2. A method of manufacturing a liquid crystal display device (10) as in claim 1, wherein said forming an externally communicable void section (63) includes forming a void portion (61; 81; 86; 91) in said glass substrate (31), and forming a through portion (62; 82; 87; 92) that penetrates from said void portion through an opposite surface on the glass substrate from said liquid crystal layer (50).

3. A method of manufacturing a liquid crystal display device (10) as in claim 2, wherein said forming an externally communicable void section is **characterized by** forming said through portion (82) in at least two parts.

4. A method of manufacturing a liquid crystal display device as in any one of claims 1 to 3, wherein said forming a light blocking layer (60; 80; 85; 90) is **characterized by** forming said light blocking layer having an area 1.0 to 1. 4 times larger than an area of shadow of said luminance point defect occurrence area projected on said glass substrate.

5. A method of manufacturing a liquid crystal display device (10) as in any one of claims 1 to 4, wherein said light blocking layer (60; 80; 85; 90) is formed in a glass substrate arranged on a lighting device side among said pair of glass substrates (31, 41).

## Patentansprüche

1. Verfahren zum Herstellen einer Flüssigkristallanzeigevorrichtung (10), die eine Flüssigkristalltafel (11) mit einer Flüssigkristalllage (50) zwischen einem Paar von Glassubstraten (31, 41) und einer Beleuchtungseinrichtung (12), die ein Beleuchtungslicht für die Flüssigkristalltafel bereitstellt, aufweist, das einen Prozess zur Kompensation eines Leuchtpunktdefekts, der durch eine Fremdsubstanz in der Flüssigkristalllage bewirkt wird, enthält, um einen Leuchtpunktdefekt zu kompensieren, wobei der Leuchtpunktdefekt-Kompensationsprozess enthält:
Festlegen eines Kompensationsbereichs in wenigstens einem des Paars von Glassubstraten in einem Bereich, der Licht, das sich zu einem Bereich des Auftretens eines Leuchtpunktdefekts bewegt, blockiert;
Bilden eines Glasdeformationsteilstücks (64) mit einem ebenen Abschnitt im Inneren des wenigstens einem des Paars von Glassubstraten und eines Durchgangsabschnitts (62; 82; 87; 92), der von dem ebenen Abschnitt zu der Oberfläche des wenigstens einem des Paars von Glassubstraten, das der Flüssigkristalllage gegenüberliegt, vordringt, durch Anwenden von Laserlicht mit einer Impulsbreite in der Größenordnung Fremtosekunden oder kürzer auf den Kompensationsbereich;
Bilden eines von außen zugänglichen Hohlraumabschnitts (63) durch Entfernen des Glasdeformationsteilstücks; und
Bilden einer Lichtbloekierschicht (60; 80; 85; 90) durch Einspritzen eines Lichtblockiermaterials in den von außen zugänglichen Hohlraumabschnitt und Härten des Lichtblockiermaterials.

2. Verfahren zum Herstellen einer Flüssigkristallanzeigevorrichtung (10) nach Anspruch 1, wobei das Bilden eines von außen zugänglichen Hohlraumabschnitts (63) das Bilden eines hohlen Abschnitts (61; 81; 86; 91) in dem Glassubstrat (31) und das Bilden eines Durchgangsabschnitts (62; 82; 87; 92), der von dem hohlen Abschnitt durch eine in Bezug auf die Flüssigkristalllage (50) gegenüberliegende Oberfläche auf dem Glassubstrat vordringt, enthält.

3. Verfahren zum Herstellen einer Flüssigkristallanzeigevorrichtung (10) nach Anspruch 2, wobei das Bilden eines von außen zugänglichen Hohlraumabschnitts durch das Bilden des Durchgangsabschnitts (82) in wenigstens zwei Teilen gskennzeichnet ist.

4. Verfahren, zum Herstellen einer Flüssigkristallanzeigevorrichtung nach einem der Ansprüche 1 bis 3, wobei das Bilden einer Lichtblockierschicht (60; 80; 85; 90) durch das Bilden der Lichtblockierschicht mit einer Fläche, die 1,0-bis 1,4-mal größer ist als eine Schattenfläche des Bereichs, in dem der Leuchtpunktdefekt auftritt, die auf das Glassubstrat projiziert wird, ausgezeichnet ist.

5. Verfahren zum Herstellen einer Flüssigkristallenzeigevorrichtung (10) nach einem der Ansprüche 1 bis 4, wobei die Lichtblockierschicht (60; 80; 85; 90) in einem auf einer Seite der Beleuchtungseinrichtung angeordneten Glassubstrat des Paars von Glassubstraten (31; 41) gebildet wird.

## Revendications

1. Procédé de fabrication d'un dispositif d'affichage à cristaux liquides (10) comprenant un panneau à cristaux liquides (11) comportant une couche de cristaux liquides (50) entre une paire de substrats de verre (31, 41) et un dispositif d'éclairage (12) qui fournit une lumière d'éclairement audit panneau à cristaux liquides, comprenant un défaut de point de luminance provoqué par une substance étrangère dans la couche de cristaux liquides, un procédé de compensation permettant de compenser un défaut de point de luminance, ledit procédé de compensation de défaut de point de luminance comprend ;
la précision d'une aire de compensation dans au moins un substrat de ladite paire de substrats de verre dans une aire qui bloque le trajet de la lumière vers une aire d'occurrence de défaut de point de luminance ;
la formation d'une partie de déformation de verre (64) comportant une portion plane à l'intérieur d'au moins un substrat de ladite paire de substrats de verre et une portion traversante (62 ; 82 ; 87 ; 92) qui pénètre de la portion plane à la surface dudit au moins un substrat de ladite paire de substrats de verre à l'opposé de ladite couche de cristaux liquides en appliquant une lumière laser présentant une largeur d'impulsion de l'ordre de la femtoseconde ou moins à ladite aire de compensation ;
la formation d'une section de vide diffusable par l'extérieur (63) en retirant ladite partie de déformation de verre ; et
la formation d'une couche de blocage de la lumière (60 ; 80 ; 85 ; 90) en injectant un matériau de blocage de la lumière dans ladite section de vide diffusable par l'extérieur et en durcissant le matériau de blocage de la lumière.

2. Procédé de fabrication d'un dispositif d'affichage à cristaux liquides (10) selon la revendication 1, dans lequel ladite formation d'une section de vide diffusable par l'extérieur (63) comprend la formation d'une portion de vide (61 ; 81 ; 86 ; 91) dans ledit substrat de verre (31), et la formation d'une portion traversante (62 ; 82 ; 87 ; 92) qui pénètre de ladite portion de vide à travers une surface opposée sur le substrat de verre depuis ladite couche de cristaux liquides (50).

3. Procédé de fabrication d'un dispositif d'affichage à cristaux liquides (10) selon la revendication 2, dans lequel ladite formation d'une section de vide diffusable par l'extérieur est **caractérisée par** la formation de ladite portion traversante (82) en au moins deux parties.

4. Procédé de fabrication d'un dispositif d'affichage à cristaux liquides selon l'une quelconque des revendications 1 à 3, dans lequel ladite formation d'une couche de blocage de la lumière (60 ; 80 ; 85 ; 90) est **caractérisée par** la formation de ladite couche de blocage de la lumière comportant une aire 1,0 à 1,4 fois supérieure à une aire d'ombre de ladite aire d'occurrence de défaut de point de luminance projetée sur ledit substrat de verre.

5. Procédé de fabrication d'un dispositif d'affichage à cristaux liquides (10) selon l'une quelconque des revendications 1 à 4, dans lequel ladite couche de blocage de la lumière (60 ; 80 ; 85 ; 90) est formée dans un substrat de verre agencé sur un côté du dispositif d'éclairage parmi ladite paire de substrats de verre (31, 41).
